(19) **Europäisches Patentamt / European Patent Office / Office européen des brevets**

(11) **EP 1 121 977 B1**

(12) **EUROPEAN PATENT SPECIFICATION**

(45) Date of publication and mention
of the grant of the patent:
**25.04.2007 Bulletin 2007/17**

(51) Int Cl.:
*B01J 20/18* (2006.01)    *B01D 53/04* (2006.01)
*C10L 3/10* (2006.01)    *C10K 1/32* (2006.01)

(21) Application number: **01102061.7**

(22) Date of filing: **30.01.2001**

(54) **Method for removing sulfur compound from fuel gases**

Verfahren zur Entfernung von Schwefelverbindungen aus Brenngasen

Procédé pour éliminer les composés soufrés des gaz combustibles

(84) Designated Contracting States:
**AT BE CH CY DE DK ES FI FR GB GR IE IT LI LU MC NL PT SE TR**

(30) Priority: **01.02.2000 JP 2000023955**
**01.08.2000 JP 2000232780**
**25.04.2000 JP 2000123527**
**25.08.2000 JP 2000256493**

(43) Date of publication of application:
**08.08.2001 Bulletin 2001/32**

(73) Proprietor: **TOKYO GAS CO., LTD.**
**Tokyo 105-8527 (JP)**

(72) Inventors:
• **Satokawa, Shigeo,**
c/o Tokyo Gas Co., Ltd.
**Tokyo 105-8527 (JP)**
• **Kobayashi, Yuji,**
c/o Tokyo Gas Co., Ltd.
**Tokyo 105-8527 (JP)**

(74) Representative: **Goddar, Heinz J. et al**
**FORRESTER & BOEHMERT**
**Pettenkoferstrasse 20-22**
**80336 München (DE)**

(56) References cited:
**EP-A- 0 056 197**    **WO-A-00/71249**
**US-A- 5 146 039**

• **DATABASE WPI Section Ch, Week 199503 Derwent Publications Ltd., London, GB; Class H06, AN 1995-019509 XP002171098 & JP 06 306377 A (NIPPON STEEL CHEM CO), 1 November 1994 (1994-11-01)**
• **DATABASE WPI Section Ch, Week 199951 Derwent Publications Ltd., London, GB; Class D22, AN 1990-228548 XP002171152 & JP 02 969634 B (TOSOH CORP), 2 November 1999 (1999-11-02)**
• **DATABASE WPI Section Ch, Week 198903 Derwent Publications Ltd., London, GB; Class E36, AN 1989-019397 XP002171133 & JP 63 294943 A (DENRYOKU CHUO KENKYUSHO) , 1 December 1988 (1988-12-01)**

**Description**

BACKGROUND OF THE INVENTION

Field of the Invention

The invention relates to a method for removing sulfur compounds from a sulfur compound-containing fuel gas by use of an adsorbent for removal of such sulfur compounds.

Prior Art

Lower hydrocarbon gases such as methane, ethane, propane, butane and the like, or gases such as a natural gas, a city gas, an LP gas or the like gas containing these hydrocarbon gases, are used not only as an industrial or domestic fuel, but also as a starting material for preparing hydrogen that is utilized as a fuel for fuel cells or an atmospheric gas. In a steam reforming process, which is one of industrial preparation processes of hydrogen, these lower hydrocarbon gases are reformed by addition of steam in the presence of a catalyst, such as a Ni-based catalyst, a Ru-based catalyst or the like, thereby forming a reformed gas mainly composed of hydrogen.

A fuel gas such as a city gas, an LP gas or the like is usually incorporated with a sulfur compound, such as a sulfide, a thiophene or a mercaptan, for use as an odorant for the purpose of security against the leakage thereof. More particularly, sulfides include dimethyl sulfide (hereinafter referred to simply as DMS), ethylmethyl sulfide, diethyl sulfide and the like, thiophenes include tetrahydrothiophene (hereinafter referred to simply as THT), and mercaptans include t-butyl mercaptan (hereinafter referred to simply as TBM), isopropyl mercaptan, n-propyl mercaptan, t-amyl mercaptan, t-heptyl mercaptan, methyl mercaptan, ethyl mercaptan and the like.

DMS, THT and TBM are, in most cases, used as an ordinarily added odorant, and are usually added to not only singly, but also in admixture of two or more (e.g. both DMS and TBM have been added to almost all city gases in the Metropolitan area of Japan at present). The concentration of the odorant is at a level of several of ppm without exception. The catalyst used for such a steam reforming process as set out above is poisoned with these sulfur compounds, thus leading to the degradation of its performance. Accordingly, these sulfur compounds in a fuel gas should be preliminarily removed from a fuel gas. Even if it is inevitable that a residual sulfur compound be contained in small amounts in the fuel gas from which the sulfur compounds have been removed, the amount of the residual sulfur compound should preferably be as small in concentration as possible.

For the removal of a sulfur compound from a fuel gas, it is usual to use a hydrodesulfurization process or a process using an adsorbent. The hydrodesulfurization process comprises adding hydrogen to a fuel gas, decomposing and converting a sulfur compound into hydrogen sulfide in the presence of a catalyst such as a Co-Mo catalyst, and desulfurizing by adsorption of hydrogen sulfide, which is a decomposition product, by means of a desulfurizing agent such as zinc oxide, iron oxide or the like. Although the hydrodesulfurization process is a reliable process, it is necessary to convert all sulfur compounds into hydrogen sulfide by hydrogenation and heating to about 300 to 400°C. In addition, since zinc oxide or iron oxide is used for adsorption and removal, operations become complicated. Accordingly, this process has been employed in a large-scale plant, but is difficult to apply to a small-sized apparatus.

On the other hand, the process using an adsorbent is one wherein a fuel gas is passed through an adsorbent mainly composed of activated carbon, a metal oxide, zeolite or the like to remove a sulfur compound by adsorption. Although the process using an adsorbent includes a process wherein adsorptivity is increased by application of heat, adsorption at normal temperatures is preferred because a simpler system is realized. A process of removing a sulfur compound at normal temperatures by use of an adsorbent needs neither heat or hydrogen as in a hydrodesulfurization process or a thermal adsorption process, and thus, is a simple desulfurization process.

As a matter of course, however, the process of removing a sulfur compound by use of an adsorbent is unable to remove the sulfur compound from a gas if the adsorbent is saturated with once adsorbed sulfur compound. Thus, an exchange or regeneration of an adsorbent is necessary. Because a required amount of an adsorbent and a frequency of the exchange are greatly influenced depending on the adsorptivity of an adsorbent, so that there is a demand for an adsorbent having higher adsorptivity. The performance of an adsorbent is influenced, especially, by the properties of a sulfur compound. Hence, with a gas containing a plurality of sulfur compounds such as a city gas, for example, a single adsorbent should have high adsorptivity against such plural sulfur compounds. Otherwise, a very burdensome problem will arise, e.g. a plurality of adsorbents corresponding to individual sulfur compounds are undesirably required.

Up to now, various types of adsorbents for sulfur compounds in a gas have been proposed. For instance, in JP 6-306377 A, mercaptans that are used as an odorant for fuel gases such as a city gas, an LP gas and the like are selectively removed in an oxygen-free atmosphere by means of a zeolite exchanged with polyvalent metal other than hydrogen and/or an alkaline earth metal. It is stated that as the polyvalent metal ions, there are preferably used those ions of Mn, Fe, Co, Ni, Cu, Sn and Zn. The sulfur compounds, which are to be adsorbed according to this technique, are directed only to mercaptans that are easy for adsorption.

We conducted experiments using a number of commercially available adsorbents including various types of porous materials such as zeolites, activated carbon, metal compounds, activated alumina, silica gels, activated clays, clay minerals and the like. Part of the results is shown in Table 2 appearing hereinafter. As a result, it was found that a specific type of activated carbon and a specific type of zeolite JP 10-237473 A) is effective for adsorption of sulfur compounds in fuel gases.

By the way, some fuel gases may contain a trace of moisture in the course of a manufacture process or a supply process. Especially, where a fuel gas containing moisture is treated with zeolite, it selectively adsorbs the moisture, so that the adsorptivity of a sulfur compound significantly lowers over the case where no moisture is contained or a very small amount of moisture is present. This is assumed for the reason that zeolite per se, which is utilized as a moisture absorber, is hydrophilic in nature and preferentially adsorbs moisture made of polar molecules. In view of this, the adsorbent for removal of sulfur compounds should selectively adsorb sulfur compounds alone in a fuel gas, and should also adsorb sulfur compounds selectively irrespective of the presence or absence of moisture in a fuel gas. However, prior-art adsorbents including those adsorbents set out in the above-discussed patent publications are not taken into consideration with regard to the selective adsorption.

As stated above, the amount of a residual sulfur compound contained in a fuel gas, from which sulfur compounds have been removed, should be at a concentration as low as possible when the fuel gas is used for steam reforming. This is for the purpose of preventing a steam reforming catalyst from poisoning with sulfur. Up to now, a copper-zinc adsorbent (JP 6-256779 A) has been reported for use as an adsorbent for removing sulfur compounds from a gas to a very low concentration. However, this adsorbent has to be heated to a temperature of 150 to 250°C in order to impart satisfactory properties thereto.

The assignee of the instant application previously proposed (JP 10-237473 A) an adsorbent for sulfur compounds in gases, which is made of an Na-X type zeolite having a pore size of at least 5 angstroms or over. This adsorbent has excellent adsorptivity at normal temperatures. Although this adsorbent shows a satisfactory performance on gases having a low dew point, i.e. gases containing no or little moisture, however, it takes precedence of adsorption of moisture in a gas having a high dew point, so that the adsorptivity of sulfur compounds considerably lowers.

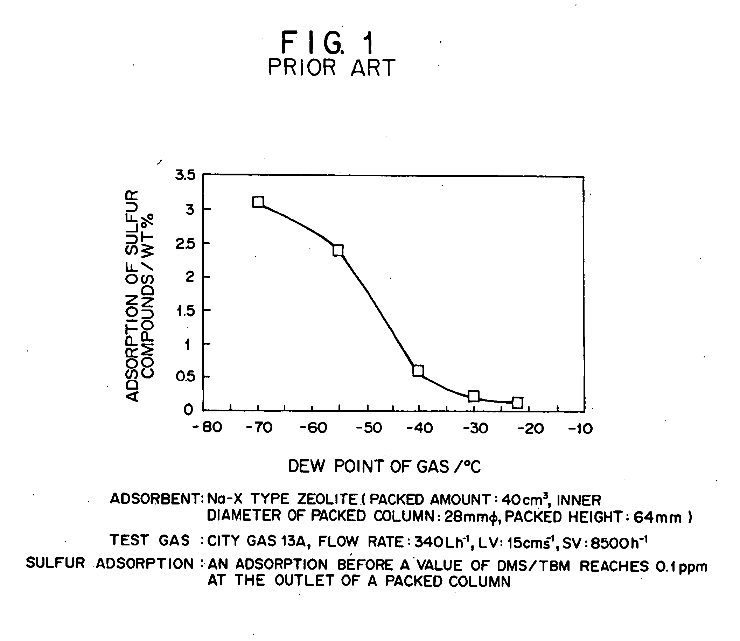

Fig. 1 is a graph showing measurements of the adsorbent. The test device and conditions are such that there is used a device as in Adsorption Test 1 described hereinafter wherein the adsorption test is carried out under different dew point conditions. As shown in Fig. 1, the adsorption performance is so excellent that the adsorption of sulfur is at 3 wt% at a dew point of -70°C. However, as the dew point increases or as the moisture content in the gas increases, the adsorption of sulfur sharply drops. For instance, the sulfur content at a dew point of -50°C is at 1.5 wt% that is about the half at a dew point of -70°C for the same adsorbent, and is as low as 0.2 wt% at a dew point of -30°C.

US 5 146 039 A discloses a process for low level desulfurization of hydrocarbons, containing sulfides, disulfides, trisulfides, tetrasulfides and further polysulfides wherein the hydrocarbon is contacted with a zeolite containing copper, silver, zinc or mixtures thereof.

SUMMARY OF THE INVENTION

In view of the above-stated problems of prior art, we made studies on adsorbents that effectively function even when moisture is contained in a fuel gas, and found that an adsorbent comprising Y-type zeolite on which a specific type of transition metal namely silver, is supported thereon through ion exchange exhibits excellent absorptivity of sulfur compounds at or in the vicinity of normal temperatures even when moisture is contained in a fuel gas.

The invention provides a method of removing sulfur compounds from sulfur compounds-containing gas, as defined in claim 1.

BRIEF DESCRIPTION OF THE DRAWINGS

Fig. 1 is a graph showing measurements of adsorptivity of a previously developed adsorbent for sulfur compounds;
Fig. 2 is a schematic view showing an embodiment of a device for carrying out the invention;
Fig. 3 is a flowchart showing three methods used for ion exchange in examples and including (a) an agitation method, (2) an impregnation method and (3) a flow method; and
Fig. 4 is a schematic view showing a test device used in examples.

PREFERRED EMBODIMENTS OF THE INVENTION

In the practice of the invention, it is important that silver (Ag) be supported on a Y-type zeolite through ion exchange.

Although the exchangeable cation used in the invention may be, for example, $Na^+$ ion or $H^+$ ion, Na-Y-type zeolite is more excellent among Y-type zeolites, and H-Y-type zeolite is ranked next thereto.

The adsorbent of the invention is able to effectively remove sulfur compounds contained in a fuel gas irrespective of a moisture concentration in the fuel gas, and exhibits excellent adsorptivity for sulfur compounds.

The adsorbent for removing sulfur compounds from fuel gases according to the invention has excellent sulfur compound adsorptivity, especially, at or in the vicinity of normal temperatures. In this regard, the afore-stated hydrodesulfurization process undesirably needs heating to approximately 300 to 400°C, aside from the hydrogenation. Moreover, with the adsorbent proposed, for example, in the JP 6-256779 A, it is necessary to heat to a temperature of 150 to 250°C. In contrast, with the adsorbent of the invention, such heating as mentioned above is unnecessary, and sulfur compounds can be effectively removed from a fuel gas at or in the vicinity of normal temperatures, thus being very convenient in practical applications. It will be noted that the adsorbent of the invention has the excellent capability of adsorption of sulfur compounds at or in the vicinity of room temperatures, and also has effective adsorptivity of sulfur compounds at higher temperatures, e.g. at a temperature of 50°C or over.

The adsorbent of the invention for removing sulfur compounds can effectively adsorb and remove sulfides, thiophenes and mercaptans present in various types of fuel gases. More particularly, the adsorbent can be applied to adsorption and removal of one or more sulfur compounds among sulfur compounds in various types of fuel gases. Especially, the adsorbent can be favorably applied to removal by adsorption of sulfur compounds, which are contained in fuel gases, such as city gas, LP gas and natural gas, at a level of several ppm.

It is to be noted that the adsorption of DMS on a silver-supported Na-Y-type zeolite has been already reported (Journal of Nippon Kagaku Kaishi, 1981, No. 12, pp. 1945 - 1950). This report has the intention of treating bad smell substances in air. Accordingly, those confirmed in this report are directed to an equilibrium adsorption of DMS in co-existence of nitrogen and moisture, and the test is such that the concentration of DMS used is as high as 100 ppm. More particularly, no report has been made yet with respect to the adsorption performance of DMS at a low concentration, the adsorption performance in fuel gases, the adsorption performance in the case where other types of sulfur compounds co-exist, and the performance on residual sulfur in the course of an adsorption test.

In contrast thereto, it has been found in the practice of the invention that the adsorbent can be effectively applied for adsorption and removal not only of sulfides such as DMS, but also of different types of sulfur compounds such as thiophenes and mercaptans in fuel gases. In addition, according to the invention, a sulfur compound, such as DMS, TBM or THT, which is contained in a fuel gas at a very low concentration of about 2 ppm, can be effectively adsorbed and removed to a level of a residual sulfur compound of 7 ppb or below.

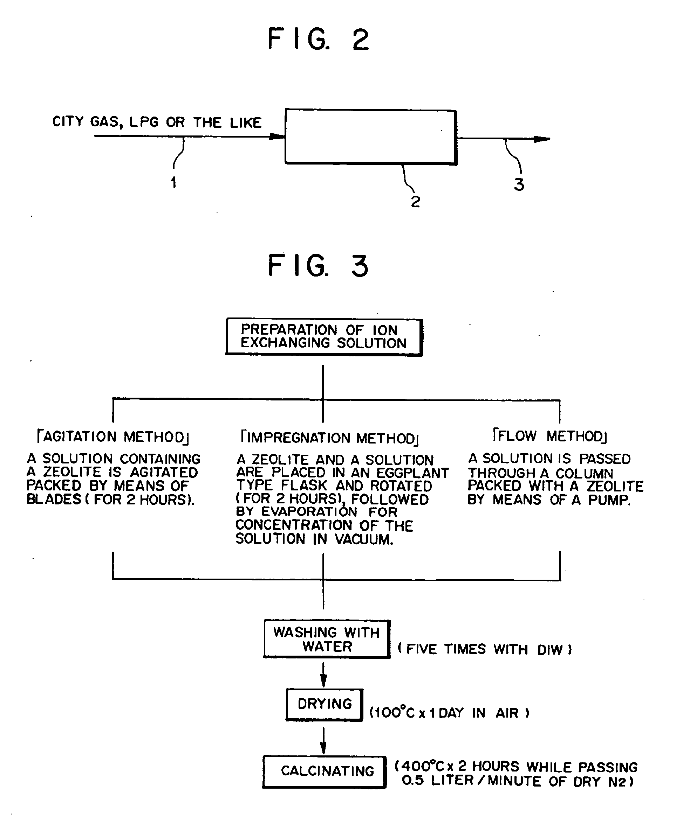

For the manufacture of the adsorbent of the invention, one silver is supported on a Y-type zeolite according to an ion exchange technique. More particularly, compounds of silver, are dissolved in water to provide an aqueous solution, followed by ion exchange with use of the solution. The compounds of the metals should be ion-exchanged with a cation ($Na^+$ or $H^+$) in the zeolite, and thus, should be made of a metal compound capable of being dissolved in water and existing as a metal ion in the aqueous solution. This aqueous solution is brought into contact with a zeolite according to a general ion exchange procedure including (1) an agitation procedure, (2) an impregnation procedure or (3) a flow procedure as is particularly shown in Fig. 3, thereby causing the cations in the zeolite to be exchanged with these metal ions. Thereafter, the zeolite is washed such as with water and dried to obtain an adsorbent of the invention. Although the zeolite may be calcinated after drying, the calcination is not always necessary.

The treatment of a fuel gas containing sulfur compounds with the adsorbent of the invention is carried out by passing a sulfur compound-containing fuel gas through the adsorbent to bring the gas into contact therewith in the same manner as a gas treatment using a conventional adsorbent. Especially, the adsorbent of the invention functions at or in the vicinity of normal temperatures without resorting to the additional application of heat, thus making a device structure and operations simple. Fig. 2 shows an example of a device for carrying out the invention. In Fig. 2, indicated by 1 is a sulfur compound-containing fuel gas charge pipe, by 2 is a sulfur compound adsorbent packed layer (reaction tube), and by 3 is a treated fuel gas discharge pipe. The sulfur compounds in the sulfur compound-containing fuel gas charged from the charge pipe 1 are adsorbed and removed in the adsorbent packed layer 2, and the resultant fuel gas is discharged from the discharge pipe 3.

According to the invention silver is supported on a Y-type zeolite through ion exchange, so that the adsorption characteristic of sulfur compounds in a fuel gas can be appreciably improved irrespective of the concentration of moisture in the fuel gas. Accordingly, not only a required amount of an adsorbent can be reduced, but also the frequencies of exchange and regeneration can be lessened. According to the invention, sulfur compounds including not only DMS, but also sulfides, mercaptans, thiophenes and the like can be effectively, simultaneously removed from fuel gases containing such sulfur compounds. Moreover, the adsorbent of the invention is able to remove sulfur compounds from a fuel gas at or in the vicinity of normal temperatures, thus being very advantageous in practical applications. The adsorbent of the invention undergoes a color change as sulfur compounds are adsorbed thereon, and the life of the adsorbent can be appropriately judged from the color change.

Examples

The invention is described in more detail by way of examples, which should not be construed as limiting the invention thereto.

(Preparation 1 of test adsorbents)

There were used, as a zeolite, commercially available X-type zeolite (made by Tosoh Corporation, commercial name: F9-HA with a $SiO_2/Al_2O_3$ ratio (molar ratio herein and whenever it appears hereinafter) = 2.5), commercially available β-type zeolite (made by Tosoh Corporation, commercial name: HSZ930HOD with a $SiO_2/Al_2O_3$ ratio = 27.4), commercially available Na-Y-type zeolite (made by Tosoh Corporation, commercial name: HSZ320NAD with a $SiO_2/Al_2O_3$ ratio = 5.7), commercially available H-Y-type zeolite (made by Tosoh Corporation, commercial name: HSZ320HOD with a $SiO_2/Al_2O_3$ ratio = 5.6), H-USY-type zeolite (made by Tosoh Corporation, commercial name: HSZ360HUD with a $SiO_2/Al_2O_3$ ratio = 13.7), K-L-type zeolite (made by Tosoh Corporation, commercial name: HSZ500KOD with a $SiO_2/Al_2O_3$ ratio = 6.0), Na-mordenite-type zeolite (made by Tosoh Corporation, commercial name: HSZ642NAD with a $SiO_2/Al_2O_3$ ratio = 18.3). These zeolites were, respectively, in the form of cylindrical pellets (1.5 mm in diameter x 3 to 4 mm in length) shaped by use of about 20 wt% of alumina or clay as a binder. On the other hand, silver nitrate, copper acetate, etc., were, respectively dissolved in distilled water to obtain aqueous solutions of the respective metal salts. These metal salt aqueous solutions were used for exchange of the cation ($Na^+$ or $H^+$) in the zeolites with an Ag ion, Cu ion, Zn ion, Fe ion, Co ion and/or Ni ion, followed by washing with distilled water (indicated as DIW in Fig. 3) five times, drying and calcining.

In Table 1, the results of the experiments are summarized. In the column of "Sample Name" in Table 1, abbreviations are mentioned. In the column, for example, the term "Ag(Na)-Y" means Na-Y type zeolite supported thereon with Ag through ion exchange. This is true of Table 2 and also of the following description. It will be noted that drying and calcinating conditions were common to all the samples wherein drying was carried out in air at 100°C for one day, and calcinating was performed in dry nitrogen at 400°C for 2 hours. In this way, sample adsorbents wherein metals were, respectively, supported on different types of zeolites through ion exchange were obtained.

Table 1 Preparation of adsorbents

| Sample Name | Weight of zeolite /g | Reagents used | Amount of reagent /g | Amount of distilled water /g | Ion exchange method |
|---|---|---|---|---|---|
| Ag(Na)-Y | 30 | Silver nitrate | 22.9 | 500 | Agitation method |
| Ag(H)-Y | 50 | Silver nitrate | 31.1 | 500 | Flow method |
| Ag(Na)-X | 75 | Silver nitrate | 30.6 | 800 | Agitation method |
| Ag(H)-β | 30 | Silver nitrate | 11.0 | 150 | Impregnation method |
| Cu(H)-Y | 75 | Copper acetate monohydrate | 20.5 | 800 | Agitation method |
| Cu(Na)-X | 75 | Copper acetate monohydrate | 17.9 | 800 | Agitation method |
| Cu(H)-β | 30 | Copper acetate monohydrate | 6.9 | 150 | Impregnation method |
| Zn(H)-β | 30 | Zinc sulfate heptahydrate | 9.4 | 150 | Impregnation method |
| Fe(H)-β | 30 | Iron sulfate heptahydrate | 4.8 | 500 | Agitation method |
| Co(H)-β | 30 | Cobalt acetate tetrahydrate | 4.4 | 150 | Impregnation method |
| Ni(H)-β | 30 | Nickel acetate tetrahydrate | 4.4 | 150 | Impregnation method |
| Na(H)-β | 30 | Sodium chloride | 20.3 | 500 | Agitation method |

(continued)

| Sample Name | Weight of zeolite /g | Reagents used | Amount of reagent /g | Amount of distilled water /g | Ion exchange method |
|---|---|---|---|---|---|
| Ag-USY | 50 | Silver nitrate | 14.4 | 500 | Flow method |
| Ag(K)-L | 30 | Silver nitrate | 21.9 | 500 | Agitation method |
| Ag(Na)-Mor | 30 | Silver nitrate | 8.5 | 150 | Impregnation method |

<Adsorption test 1 of sulfur compounds (Examples 1 to 13 and Comparative Examples 1 to 17>

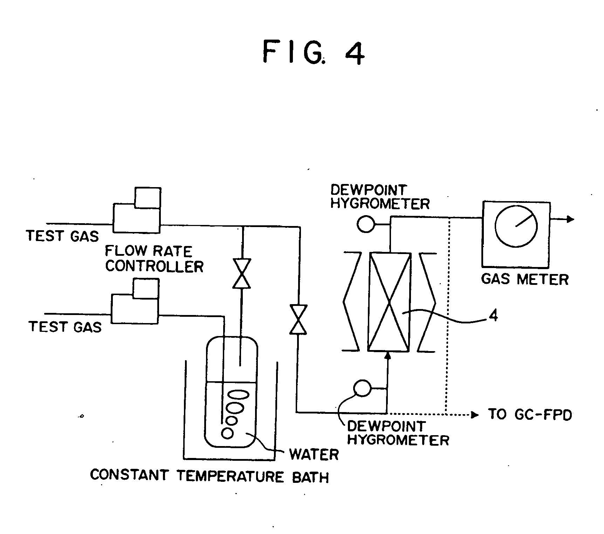

Using a test device shown in Fig. 4, adsorption tests of sulfur compounds were conducted. In Fig. 4, reference numeral 4 indicates a packed column (i.e. a cylindrical reaction tube), in which the respective test adsorbents were packed, followed by carrying out an adsorption test of sulfur compounds. The test conditions are shown below.

Packed column: 28.4 mm in diameter x 63.2 mm in height. Each test adsorbent was packed therein in an amount of 40 cm$^3$. Test gas: city gas (13A consists of methane=87.8%, ethane=5.9%, propane=4.6%, n-pentane=0.8%, and i-pentane=0.8% approximately). Sulfur compound concentration of test gas: 4.4 mg-S/N m$^3$ (DMS = 50 wt% and TBM = 50 wt%, corresponding to DMS = 1.8 ppm and TBM = 1.2 ppm in the gas). About 380 ppm (dew point of -30°C) of water was added to the gas (by bubbling the test gas in water in a temperature controlled bath). Gas flow rate: 340 liters/hour, LV (linear velocity of gas = 15 cm/second, SV (space velocity) = 8500 hour$^{-1}$. Temperature: room temperature (of about 20°C). Pressure: normal pressure.

This adsorption test including comparative examples was performed using the same device and conditions as mentioned above.

The adsorption of sulfur compounds with each test adsorbent was determined in the following manner. Under the above-indicated test conditions, a test gas was introduced from the inlet of the packed column, and the gas discharged from the outlet of the packed column was sampled in relation to time and the concentration of the sulfur compounds were determined by GC-FPD (flame photometric detector-equipped gas chromatoraph). The adsorption of the sulfur compounds at the outlet is calculated according to the following equation wherein the total adsorption of the sulfur compounds was integrated before the concentrations of sulfur compounds at the outlet of the packed column arrived at 0.1 ppm.

$$\text{Adsorption of sulfur compounds (wt\%)} =$$

$$\frac{\text{amount of sulfur in adsorbed sulfur compounds (g)}}{\text{weight of adsorbent (g)}} \times 100 \quad (1)$$

Table 2 shows the results of the adsorption test. In Table 2, there are also shown, for comparison, the results of the adsorption tests using, aside from different types of test adsorbents and commercially available zeolites per se, commercially available adsorbents and porous materials that are considered to have adsorption action. In Table 2-1, Examples 1 and 2 are covered by the appended claims.

Table 2-1 Results of Adsorption Test 1

| Examples | Sample name | Base material | Si/Al$_2$*1 | Name of adsorbent (commercial name, etc.) | Manufacturer | Adsorption of sulfur compounnds *2 |
|---|---|---|---|---|---|---|
| Example 1 | Ag(Na)-Y | Na-Y zeolite | 5.7 | HSZ320 NAD | Tosoh Corp. | 4.10 wt% |
| Example 2 | Ag(H)-Y | H-Y zeolite | 5.6 | HSZ320 HOD | Tosoh. Corp. | 1.91 wt% |
| Example 3 | Ag(Na)-X | Na-X zeolite | 2.5 | F9-HA | Tosoh Corp. | 1.73.wt% |
| Example 4 | Ag(H)-β | H-β zeolite | 27.4 | HSZ390 HOD | Tosoh Corp. | 1.70 wt% |
| Example 5 | Ag(H)-USY | H-USY zeolite | 13.7 | HSZ360 HUD | Tosoh Corp. | 0.34 wt% |
| Example 6 | Ag(K)-L | K-L zeolite | 6.0 | HSZ500 KOD | Tosoh Corp. | 0.19 wt% |

(continued)

| Examples | Sample name | Base material | Si/Al$_2$*1 | Name of adsorbent (commercial name, etc.) | Manufacturer | Adsorption of sulfur compounnds *2 |
|---|---|---|---|---|---|---|
| Example 7 | Ag(Na)-Mor | Na-modenite zeolite | 18.3 | HSZ642 NAD | Tosoh Corp. | 0.46 wt% |
| Example 8 | Cu(H)-Y | H-Y zeolite | 5.6 | HSZ320 HOD | Toso Corp. | 1.17 wt% |
| Example 9 | Cu(H)-β | H-β zeolite | 27.4 | HSZ390 HOD | Toso Corp. | 1.10 wt% |
| Example 10 | Zn(H)-β | H-β zeolite | 27.4 | HSZ390 HOD | Tosoh Corp. | 0.24 wt% |
| Example 11 | Fe(H)-β | H-β zeolite | 27.4 | HSZ390 HOD | Tosoh Corp. | 0.14 wt% |
| Example 12 | Co(H)-β | H-β zeolite | 27.4 | HSZ390 HOD | Tosoh Corp. | 0.14 wt% |
| Example 13 | Ni(H)-β | H-β zeolite | 27.4 | HSZ390 HOD | Tosoh Corp. | 0.13 wt% |
| *1: Si/Al$_2$ means a molar ratio of SiO$_2$/Al$_2$O$_3$. **2: The mark "-" at the column of Adsorption of sulfur compounds means that the break-through of the sulfur compounds started to occur immediately after commencement of the test and substantially no adsorptivity of the sulfur compounds took place. | | | | | | |

Table 2-2

| Comparative Examples | Sample name | Base material | Si/Al$_2$ | Name of adsorbent (commercial name, etc.) | Manufacturer | Adsorption of sulfur compounds |
|---|---|---|---|---|---|---|
| Comp. Ex. 1 | Na-Y | Na-Y zeolite | 5.7 | HSZ320 NAD | Tosoh Corp. | <0.01 wt% |
| Comp. Ex. 2 | H-Y | H-Y zeolite | 5.6 | HSZ320 HOD | Tosoh Corp. | 0.05 wt% |
| Comp. Ex. 3 | Na-X | Na-X zeolite | 2.5 | F9-HA | Tosoh Corp. | 0.23 wt% |
| Comp. Ex. 4 | H-β | H-β zeolite | 27.4 | HSZ390 HOD | Tosoh Corp. | 0.06 wt% |
| Comp. Ex. 5 | Na-β | H-β zeolite | 27.4 | HSZ390 HOD | Tosoh Corp. | 0.04 wt% |
| Comp. Ex. 6 | H-USY | H-USY zeolite | 13.7 | HSZ360 HUD | Tosoh Corp. | <0.01 wt% |
| Comp. Ex. 7 | K-L | K-L zeolite | 6.0 | HSZ500 KOD | Tosoh Corp. | <0.01 wt% |
| Comp. Ex. 8 | Na-Mor | Na-mordenite zeolite | 18.3 | HSZ642 NAD | Tosoh Corp. | 0.01 wt% |
| Comp. Ex. 9 | H-Mor | H-morde-nite zeolite | 15.0 | HSZ620 HOD | Tosoh Corp. | <0.01 wt% |
| Comp. Ex. 10 | Activated carbon | Activated carbon (for halogen adsorption) | | XRC824 | Takeda Chem. Ind. Co. | 0.03 wt% |
| Comp. Ex. 11 | Activated carbon | | | TAC824 | Takeda Chem. Ind. Co. Ind. Co. | 0.03 wt% |
| Comp. Ex. 12 | Activated carbon | Activated carbon (for sulfur adsorption) Activated carbon (for odorant adsorption) | | SRCX | Takeda Chem. Ind. Co. | 0.07 wt% |
| Comp. Ex. 13 | Metal oxide | ZnO | | C7-2 | Toyo CCI | - |
| Comp. Ex. 14 | Alumina | Activated alumina | | KHD12 | Sumitomo Chem. Ind. Co. | 0.01 wt% |

(continued)

| Comparative Examples | Sample name | Base material | Si/Al$_2$ | Name of adsorbent (commercial name, etc.) | Manufacturer | Adsorption of sulfur compounds |
|---|---|---|---|---|---|---|
| Comp. Ex. 15 | Alumina | Activated alumina | | KHO12 | Sumitomo Chem. Ind. Co: | - |
| Comp. Ex. 16 | Silica | Silica gel | | A type | Fuji Silicia Chem Co. | 0.08 wt% |
| Comp. Ex. 17 | Silica | Silica gel | | B type | Fuji Silicia Chem Co. | <0.01 wt% |

As will be apparent from Table 2, with the commercially available zeolites (Comparative Examples 1 to 9), the sulfur adsorption is, at most, as low as 0.23 wt%. With respect to the adsorbents other than the commercially available zeolites (Comparative Examples 10 to 17), the adsorption is further lower: More particularly, these results reveal that the adsorbents made of the commercially available zeolites and activated carbons and the like are not useful as an adsorbent for sulfur compounds in a moisture-containing fuel gas, respectively.

In contrast, in view of Examples 1 to 13 wherein a transition metal such as Ag, Cu, Zr, Fe, Co or Ni is supported on each of the commercially available zeolites (Comparative Examples 1 to 8) through ion exchange, the sulfur adsorptivity is effectively improved over those of the commercially available zeolites alone.

Especially, where silver or copper is supported on the X-type zeolite, Y-type zeolite or β-type zeolite through ion exchange (Examples 1 to 4, 8 to 9), the adsorption of sulfur compounds exceeds 1 wt%, and thus, a very effective adsorption characteristic is ensured. Among them, the sulfur adsorption of the case (Example 1) wherein Ag is supported on the Na-Y type zeolite through ion exchange is at 4.1 wt%, ensuring a very excellent adsorption characteristic.

It has been demonstrated that the test gas contains 1.8 ppm of DMS, 1.2 ppm of TBM and about 380 ppm of moisture, and DMS and TBM can be effectively adsorbed in the co-existence of moisture.

We unexpectedly found during the course of the experiments that as the adsorbents of Examples 1 to 9 adsorbed the sulfur compounds, they underwent a clear color change. The results of the observation are shown in Table 3. In the column "Prior to Test" in Table 3, a color of each adsorbent in such a state as to have the capability of sulfur adsorption (i.e. the capability of desulfurization) before the test is carried out is shown. In the column "After Test", the color of the adsorbent obtained after having carried out the adsorption test, or in such a state as to have little or no sulfur adsorptivity after adsorption of sulfur to saturation (no capability of desulfurization) is shown.

Table 3 Color Change of Adsorbent

| Example Nos. | Name of Sample | Prior to Test (with capability of desulfurization) | After Test (with no capability of desulfurization) |
|---|---|---|---|
| Example 1* | Ag(Na)-Y | White | Brown |
| Example 2* | Ag(H)-Y | White | Brown |
| Example 8 | Ag(Na)-X | Light brown | Brown |
| Example 4 | Ag(H)-β | White | Brown |
| Example 5 | Ag(H)-USY | White | Brown |
| Example 6 | Ag(K)-L | White | Brown |
| Example 7 | Ag(Na)-Mor | White | Brown |
| Example 8 | Cu(H)-Y | Blue | Brown |
| Example 9 | Cu(H)-β | Blue | Brown |
| Comp. Ex. 1 | Na-Y | White | White |
| Comp. Ex. 2 | H-Y | White | White |
| Comp. Ex. 3 | Na-X | Light brown | Light brown |
| Comp. Ex. 4 | H-β | White | White |
| Comp. Examples 10 to 12 | Activated carbon | Black | Black |

(continued)

| Example Nos. | Name of Sample | Prior to Test (with capability of desulfurization) | After Test (with no capability of desulfurization) |
|---|---|---|---|
| Comp. Ex. 13 | Metal oxide | Black | Black |
| *covered by the appended claims. | | | |

In Table 3, for example, with the Na-Y type zeolite of Comparative Example 1, the adsorbent prior to the test is white in color and no color change took place after the test. Similar results are obtained in the other comparative examples.

In contrast, with Ag(Na)-Y of Example 1, for example, the adsorbent prior to the test is white in color, which was changed to brown after the test. This color change took place in a similar way in other Examples 2 to 7.

In any of Examples 1 to 9, as the adsorption of the sulfur compounds in the fuel gas is in progress, the color change gradually proceeds from the inlet side of the adsorbent bed toward the outlet side. After passage over a certain time after commencement of the test, it was confirmed that the leading point of the color change arrived at the vicinity of the outlet of the adsorbent bed. During the course of these tests, the treated gas was sampled in relation to time from the outlet of the adsorption tube and subjected to continuous measurement of the concentrations of the sulfur compounds in the gas by means of GC-FPD. As a result, it was found that in all of Examples 1 to 9, the sulfur compounds were detected some time after the color change arrived at the outlet of the adsorbent bed, thus resulting in the commencement of break-through.

When this color change is utilized, the life of the adsorbent for sulfur compounds in a fuel gas can be simply, reliably judged depending on the color change and replacement to the new adsorbent can be conducted suitably.

<Preparation 2 of test adsorbents>

With respect to the adsorbent of the type wherein Ag was supported on the Na-Y type zeolite through ion exchange and which exhibited very excellent sulfur adsorptivity as set out hereinabove, an adsorption performance was tested in relation to the mixing ratio between silver nitrate and Na-Y type zeolite at the time of ion exchange and the ion exchange time. Table 4 shows preparation conditions of samples. The ion exchange of Ag was carried out by mixing the same type of Na-Y type zeolite (Tosoh Corporation, commercial name: HSZ320NAD, cylindrical pellets) as used in Preparation 1 of Test Adsorbent and a silver nitrate aqueous solution at different Ag/Na ratios (i.e. molar ratios between Ag in the aqueous solution and Na in the Na-Y type zeolite) ranging from 0.05 to 0.75 and subjecting to an agitation method (sample Nos. 1 to 5). Moreover, the Ag/Na ratio was set at a given value (Ag/Na mixing ration was 0.75), under which samples were prepared while using an aqueous solution of 50°C and changing an ion exchange time of 1 hour to 15 hours (sample Nos. 5 to 7).

Table 4 Adsorbent preparation method of Examples 14, 15

| Sample No. | Ag/Na (mixing ratio) | Weight of zeolite /g | Silver nitrate /g | Distilled water /g | Ion exchange Temperature /°C | Ion exchange time /hours |
|---|---|---|---|---|---|---|
| 1 | 0.05 | 50 | 1.36 | 800 | 50 | 3 |
| 2 | 0.15 | 50 | 4.10 | 800 | 50 | 3 |
| 3 | 0.38 | 50 | 10.34 | 800 | 50 | 3 |
| 4 | 0.50 | 50 | 13.60 | 800 | 50 | 3 |
| 5 | 0.75 | 50 | 20.40 | 800 | 50 | 3 |
| 6 | 0.75 | 50 | 20.40 | 800 | 50 | 1 |
| 7 | 0.75 | 50 | 20.40 | 800. | 50 | 15 |

Example 14 = Sample Nos. 1 to 5, Example 15 = Sample Nos. 5 to 7

<Adsorption test 2 of sulfur compounds (Examples 14, 15)>

Using the test device shown in Fig. 4, an adsorption test of sulfur compounds was conducted. The cylindrical pellets obtained in Preparation 2 of Test Adsorbents were divided into pieces classified to have a size of 0.35 mm to 0.71 mm and packed in amount of 1.0 $cm^3$ in a quartz tube (packed column as 4 in Fig. 4) having an inner diameter of 8 mm. A test gas used was one wherein about 1000 ppm of moisture (corresponding to a dew point of -20°C) was added to DMS diluted with nitrogen (DMS = 10 ppm/$N_2$). The flow rate of the gas was set at 1000 $cm^3$ /minute (SV (space velocity) = 60000 $h^{-1}$), and a gas at the outlet side of an adsorbent was sampled in relation to time, followed by measurement at given intervals of time by means of GC-FPD to determine a concentration of DMS. The results are shown in Table 5. In Table 5, the term "break-through time" means a time before the concentration of DMS in the gas discharged from the outlet of the packed column arrived at 0.1 ppm. The term "Adsorption of Sulfur Compounds" means an amount of sulfur in DMS adsorbed before arrival at the break-through time and calculated according to the afore-indicated equation (1).

Table 5 Test results of Examples 14, 15

| Sample No. | Measured dew point /°C | Adsorption temperature /°C | Break-through time /minutes | Adsorption of Sulfur Compounds /wt% |
|---|---|---|---|---|
| 1 | -20.6 | 26.7 | 504 | 1.23 |
| 2 | -20.5 | 27.5 | 854 | 2.12 |
| 3 | -19.7 | 25.0 | 1778 | 3.52 |
| 4 | -20.3 | 26.5 | 1827 | 4.30 |
| 5 | -20.5 | 25.3 | 2145 | 4.92 |
| 6 | -19.4 | 27.8 | 1775 | 3.88 |
| 7 | -19.7 | 26.9 | 2045 | 4.87 |

Example 14 = sample Nos. 1 to 5 (adsorbents different in amount of the ion exchanged metal).

Example 15 = Sample Nos. 5 to 7 (adsorbents different in ion exchange time).

As shown in Table 5 (sample Nos. 1 to 5 of Example 14), the adsorbents wherein the Na-Y type zeolite was ion-exchanged with Ag exhibit a sulfur adsorption of 1 wt% or over in all the cases, and in the case where the amount of the exchanged Ag is small (wherein an Ag/Na mixing ratio is small), a satisfactory effect is obtained. On the other hand, it will be seen that when the amount of Ag relative to the Na-Y type zeolite is large (wherein the Ag/Na mixing ratio is large), the adsorption is increased. As shown in Table 5 (sample Nos. 5 to 7 of Example 15), the adsorptivity of the adsorbents wherein the Na-Y type zeolite is ion-exchanged with Ag is substantially at an intended level when the ion exchange time is approximately 3 hours or over.

<Adsorption test 3 of sulfur compound (Example 16)>

Using the same device as used in Adsorption Test 2, an adsorbent of sample No. 3 prepared in Preparation 2 of test adsorbent was packed in a quarts tube (packed column 4 in Fig. 4) in an amount of 0.5 $cm^3$, and a test gas composed of DMS diluted with nitrogen (DMS = 10 ppm/$N_2$), to which about 1000 ppm of moisture (dew point of -20°C) was added, was used. The gas flow rate was set at 1000 $cm^3$/minute (SV = 120000 $hour^{-1}$), and the gas discharged from the outlet of the packed column was sampled in relation to time, followed by measurement at given intervals of time by means of GC-FPD to determine a concentration of DMS. The adsorption tube was placed in a thermostatic container wherein the adsorption test was carried out at room temperature of about 20°C, and also carried out at different temperatures of about 50°C and about 80°C.

The results are shown in Table 6. In Table 6, the term "break-through time" means a time before the concentration of DMS in the gas discharged from the outlet of the packed column arrived at 0.1 ppm. The term "Adsorption of Sulfur Compounds" means an amount of sulfur in DMS adsorbed before arrival at the break-through time, which is calculated according to the afore-indicated equation (1). As shown in Table 6, the adsorptivity of the adsorbents wherein Na-Y type zeolite was ion exchanged with silver is the highest in the vicinity of 20°C. As the adsorption temperature increases, the adsorptivity lowers to some degree and the lowering of the adsorption at 80°C is only about 20%, thus exhibiting effective adsorptivity irrespective of the adsorption temperature.

Table 6 Results of Adsorption Test 3 (Example 16)

| Adsorption temperature /°C | Measured dew point /°C | Adsorption of Sulfur compounds /wt% |
|---|---|---|
| 21.5 | -20.8 | 3.65 |
| 50.7 | -19.0 | 3.54 |
| 80.6 | -21.8 | 2.88 |

<Adsorption test 4 of sulfur compound (Example 17)>

Using the same device as used in Adsorption Test 2, the adsorbent of sample No. 3 (Ag/Na mixing ratio = 0.38) prepared in Preparation 2 of test adsorbent and the adsorbent of sample No. 5 (Ag/Na mixing ratio = 0.75) were respectively, packed in a quartz tube (packed column 4 in Fig. 4) in an amount of 1.0 cm$^3$, and a test gas composed of THT diluted with nitrogen (THT = 10 ppm/N$_2$), to which about 1000 ppm of moisture (dew point of -20°C) was added, was used. The gas flow rate was set at 1000 cm$^3$/minute (SV = 60000 hours), and the gas discharged from the outlet of the packed column was sampled in relation to time, followed by measurement at given intervals of time by means of GC-FPD to determine a concentration of THT.

The results are shown in Table 7. In Table 7, the term "break-through time" means a time before the concentration of THT in the gas discharged from the outlet of the packed column arrived at 0.1 ppm. The term "Adsorption of Sulfur Compounds" means an amount of sulfur in THT adsorbed before arrival at the break-through time, which is calculated according to the afore-indicated equation (1). As shown in Table 7, the adsorbent wherein Na-Y zeolite is ion-exchanged with silver exhibits effective adsorptivity against a small amount of THT present in the gas irrespective of the amount of the ion-exchanged silver.

Table 7 Results of Adsorption Test 4 (Example 17)

| Sample No. | Measured dew point /°C | Adsorption temperature /°C | Break-through time /minutes | Adsorption of Sulfur Compounds /wt% |
|---|---|---|---|---|
| 3 | -18.75 | 30.0 | 1877 | 4.13 |
| 5 | -19.54 | 26.0 | 2172 | 4.45 |

<Adsorption test 5 of sulfur compound (Example 18)>

In the Adsorption Tests 1 to 4, the performance of the adsorbents was evaluated by sampling a gas from the outlet of the adsorbent packed column in relation to time and analyzing by means of GC-FPD. In this Adsorption Test 5, a gas at the outlet of the adsorbent packed column was analyzed by means of GC-SCD (gas chromatograph equipped with a chemical emission detector for sulfur) that could analyze a very low concentration of sulfur at higher sensitivity. The test conditions were the same as in Adsorption test 1 except that any moisture was not added to the test gas (dew point of about -60°C). Table 8 shows the results of the analysis at the time of 25 hours after commencement of the test. For comparison, the corresponding values in Example 1 using GC-FPD are also indicated.

Table 8 Results of Adsorption Test 5 (Example 18)

| | Detector | Lower limit of detection | Results of analysis at outlet of adsorption column |
|---|---|---|---|
| Example 1 | GC-FPD | About 50 ppb | Lower than the lower limit of detection |
| Example 18 | GC-SCD | About 7 ppb | Lower than the lower limit of detection |

As stated hereinbefore, the concentration of a residual sulfur compound contained in a fuel gas after removal of sulfur compounds should preferably be as low as possible. As will be apparent from Table 8, when using the adsorbent of the invention, the sulfur compound component in the city gas can be adsorbed and removed to a very low concentration of 7 ppb or below.

**Claims**

1.    A method of removing sulfur compounds from a fuel gas, comprising the steps of:

- providing an adsorbent for removal of sulfur compounds, said adsorbent comprising a zeolite ion exchanged with Ag; and
- passing the fuel gas through said adsorbent; and
- using a Y type zeolite to support Ag thereon through ion exchange; and
- removing sulfides, mercaptans and thiophenes simultaneously from the fuel gas.

2. The method according to claim 1, wherein the sulfides include dimethylsulfides, mercaptans include t-butyl mercaptan, and thiophenes includes tetrahydrothiophene.

3. The method according to claim 1 or 2, wherein the fuel gas has a residual sulfur component concentration of no greater than 7 ppb after passing through the adsorbent.

4. The method according to claim 1, wherein the sulfur components are removed at room temperature.

5. The method according to claim 1, additionally comprising the step of determining the life of the adsorbent based on a color change thereof.

6. The method according to claim 1, wherein the sulfur compounds are removed from the fuel gas irrespective of a moisture concentration in the fuel gas.

7. A method according to any of the preceding claims, wherein said fuel gas consists of a city gas, a liquefied petroleum gas or a natural gas.

**Patentansprüche**

1. Verfahren zum Entfernen von Schwefelverbindungen aus einem Brennstoffgas, mit den Schritten:

- Bereitstellen eines Adsorptionsmittel zum Entfernen von Schwefelverbindungen, wobei das Adsorptionsmittel einen Zeolithen im Ionenaustausch mit Ag aufweist; und
- Leiten des Brennstoffgases durch das Adsorptionsmittel; und
- Verwenden eines Zeoliths vom Y-Typ, um Ag darauf durch Ionenaustausch zu halten; und
- gleichzeitiges Entfernen von Sulfiden, Mercaptanen und Thiophenen aus dem Brennstoffgas.

2. Verfahren nach Anspruch 1, bei dem die Sulfide Dimethylsulfide umfassen; die Mercaptane t-Butylmercaptan umfassen und die Thiophene Tetrahydrothiophen umfassen.

3. Verfahren nach Anspruch 1 oder 2, bei dem das Brennstoffgas eine Restkonzentration an Schwefelverbindungen von nicht mehr als 7 ppb hat, nachdem es das Adsorptionsmittel durchströmt hat.

4. Verfahren nach Anspruch 1, bei dem die Schwefelkomponenten bei Zimmertemperatur entfernt werden.

5. Verfahren nach Anspruch 1, zusätzlich mit dem Schritt des Bestimmens der Lebensdauer des Adsorptionsmittels basierend auf einer Farbänderung desselben.

6. Verfahren nach Anspruch 1, bei dem die Schwefelverbindungen aus dem Brennstoffgas ungeachtet einer Feuchtigkeitskonzentration in dem Brennstoffgas entfernt werden.

7. Verfahren nach einem der vorangehenden Ansprüche, bei dem das Brennstoffgas aus Stadtgas, verflüssigtem Erdölgas oder einem natürlichen Gas besteht.

**Revendications**

1. Procédé d'élimination de composés soufrés d'un combustible gazeux, comprenant les étapes consistant à :

- former un adsorbant pour l'élimination de composés de soufre, ledit adsorbant comprenant une zéolite ayant fait l'objet d'un échange d'ions avec Ag ; et
- faire passer le combustible gazeux à travers ledit adsorbant ;
et
- utiliser une zéolite de type Y pour supporter sur celle-ci du Ag par échange d'ions ; et
- éliminer les sulfures, les mercaptans et thiophènes simultanément du combustible gazeux.

**2.** Procédé selon la revendication 1, dans lequel les sulfures comprennent les diméthylsulfures, les mercaptans comprennent le t-butyl mercaptan, et les thiophènes comprennent le tétrahydrothiophène.

**3.** Procédé selon la revendication 1 ou 2, dans lequel le combustible gazeux a une concentration en composant soufré résiduel non supérieure à 7 ppb après avoir traversé l'adsorbant.

**4.** Procédé selon la revendication 1, dans lequel les composants soufrés sont éliminés à température ambiante.

**5.** Procédé selon la revendication 1, comprenant de plus l'étape consistant à déterminer la durée de vie de l'adsorbant sur la base d'un changement de couleur de celui-ci.

**6.** Procédé selon la revendication 1, dans lequel les composés soufrés sont éliminés du combustible gazeux quelle que soit la concentration en humidité dans le combustible gazeux.

**7.** Procédé selon l'une quelconque des revendications précédentes, dans lequel ledit combustible gazeux consiste en un gaz de ville, un gaz de pétrole liquéfié ou un gaz naturel.

# FIG. 1
## PRIOR ART

ADSORBENT: Na-X TYPE ZEOLITE ( PACKED AMOUNT : 40cm³, INNER
DIAMETER OF PACKED COLUMN : 28mmφ, PACKED HEIGHT : 64mm )

TEST GAS : CITY GAS 13A, FLOW RATE : 340Lh⁻¹, LV : 15cms⁻¹, SV : 8500h⁻¹

SULFUR ADSORPTION : AN ADSORPTION BEFORE A VALUE OF DMS/TBM REACHES 0.1ppm
AT THE OUTLET OF A PACKED COLUMN

EP 1 121 977 B1

# FIG. 2

CITY GAS, LPG OR THE LIKE

1

2

3

# FIG. 3

PREPARATION OF ION EXCHANGING SOLUTION

「AGITATION METHOD」

A SOLUTION CONTAINING A ZEOLITE IS AGITATED PACKED BY MEANS OF BLADES ( FOR 2 HOURS).

「IMPREGNATION METHOD」

A ZEOLITE AND A SOLUTION ARE PLACED IN AN EGGPLANT TYPE FLASK AND ROTATED ( FOR 2 HOURS), FOLLOWED BY EVAPORATION FOR CONCENTRATION OF THE SOLUTION IN VACUUM.

「FLOW METHOD」

A SOLUTION IS PASSED THROUGH A COLUMN PACKED WITH A ZEOLITE BY MEANS OF A PUMP.

WASHING WITH WATER    ( FIVE TIMES WITH DIW )

DRYING    ($100°C \times 1$ DAY IN AIR )

CALCINATING    ($400°C \times 2$ HOURS WHILE PASSING 0.5 LITER / MINUTE OF DRY $N_2$)

# FIG. 4